# EUROPÄISCHE PATENTANMELDUNG

(11) **EP 3 950 611 A1**
(43) Veröffentlichungstag der Anmeldung: **09.02.2022**
(21) Anmeldenummer: 20189830.1
(22) Anmeldetag: 06.08.2020
(51) Int. Cl.: C03B 19/14

(54) **ALTERNATIVE FLUORIERUNGSMITTEL ZUR HERSTELLUNG VON FLUORIERTEM QUARZGLAS**

(71) Anmelder: Heraeus Quarzglas GmbH & Co. KG, 63450 Hanau (DE)
(72) Erfinder: Ochs, Stefan, 63450 Hanau (DE); Kayser, Thomas, 63450 Hanau (DE); Trommer, Martin, 63450 Hanau (DE)
(74) Vertreter: Gille Hrabal Partnerschaftsgesellschaft mbB Patentanwälte

(57) **Zusammenfassung**

Beschrieben wird ein Verfahren zur Herstellung von einem fluorierten Quarzglas, umfassend die Verfahrensschritte des Bereitstellens eines SiO₂-Sootkörpers; des Umsetzens des SiO₂-Sootkörpers mit einem Fluorierungsmittel, welches einen Siedepunkt von größer gleich -10 °C aufweist, unter Erhalt eines fluorierten SiO₂-Sootkörpers; und des Verglasens des fluorierten SiO₂-Sootkörpers.

## Beschreibung

Die vorliegende Erfindung betrifft ein Verfahren zur Herstellung von fluoriertem Quarzglas sowie das durch dieses erfindungsgemäße Verfahren erhältliche fluorierte Quarzglas. Weiterer Gegenstand der vorliegenden Erfindung ist die Verwendung von alternativen und verbesserten Fluorierungsmitteln zur Herstellung von fluoriertem Quarzglas.

Zur Herstellung von synthetischem Quarzglas werden aus einer siliziumhaltigen Ausgangssubstanz in einem CVD-Verfahren durch Hydrolyse oder Oxidation SiO₂-Partikel erzeugt und auf einem sich bewegenden Träger abgeschieden. Es kann dabei zwischen Außen- und Innenabscheideverfahren unterschieden werden. Bei Außenabscheideverfahren werden die SiO₂-Partikel auf der Außenseite eines rotierenden Trägers aufgebracht. Als Beispiele für entsprechende Außenabscheideverfahren seien das so genannte OVD-Verfahren (Outside Vapour Phase Deposition), das VAD-Verfahren (Vapour Phase Axial Deposition), das POD-Verfahren (Plasma Outside Deposition) oder das PECVD-Verfahren (Plasma Enhanced Chemical Vapour Deposition) genannt. Als bekannteste Beispiele für ein Innenabscheideverfahren seien das MCVD-Verfahren (Modified Chemical Vapour Deposition), das FCVD-Verfahren (Furnace Chemical Vapour Deposition) und das PCVD-Verfahren (Plasma Chemical Vapour Deposition) genannt, bei dem auf der Innenwandung eines von außen erhitzten Rohres SiO₂-Partikel abgeschieden werden.

Bei hinreichend hoher Temperatur im Bereich der Trägeroberfläche kommt es zu einem unmittelbaren Verglasen der SiO₂-Partikel, was auch als "Direktverglasen" bekannt ist. Im Unterschied dazu ist beim sogenannten "Sootverfahren" die Temperatur beim Abscheiden der SiO₂-Partikel so niedrig, dass eine poröse SiO₂-Sootschicht erhalten wird, die dann in einem separaten Verfahrensschritt zu transparentem Quarzglas gesintert wird. Sowohl das Direktverglasungsverfahren als auch das Sootverfahren führen zu einem dichten, transparenten, hochreinen und synthetischen Quarzglas.

Das Sootverfahren eignet sich insbesondere zur Herstellung von synthetischem Quarzglas, welches Fremdatome (Dotierung) aufweist, da die poröse Struktur des Sootkörpers einen Einbau von Fremdatomen ermöglicht.

Durch das Einbringen von Fremdatomen in das Quarzglas lassen sich dessen physikalische Eigenschaften beeinflussen. So führt beispielsweise das Dotieren von Quarzglas mit Fluor zu einer Absenkung des Brechungsindexes. Fluordotiertes Quarzglas wird daher unter anderem zur Herstellung lichtleitender Brechzahlstrukturen in optischen Fasern verwendet, zum Beispiel für Spezialfasern zu Lichtleistungsübertragung, die eine oder mehrere F-dotierte, brechzahlabgesenkte Mantelschichten aufweisen, für die Herstellung von aktiven Hochleistungs-Laserfasern und deren Vorprodukten mit F-dotierter äußerer Mantelschicht, für fluordotierte Rohre und Kapillare, die unter anderem für Faser-Combiner eingesetzt werden, für biegeunempfindliche Fasern oder in sogenannten "ultra low loss Fasern". Dabei stehen dem Fachmann eine Reihe von Verfahren zur Verfügung. So kann beispielsweise als Halbzeug für derartige optische Fasern entweder eine Vorform eingesetzt werden, die in radialer Richtung ein Brechzahlprofil aufweist und die unmittelbar zu der gewünschten Faser gezogen werden kann. Alternativ kann ein stab- oder rohrförmiger Zylinder, der mindestens eine Schicht aus fluordotiertem Quarzglas aufweist, verwendet werden. Dieser kann zusammen mit anderen zylinderförmigen Bauteilen als Ensemble in koaxialer Anordnung zu der Faser elongiert werden. Weiterhin finden derartige mit Fluor dotierte Quarzglas-Zylinder in der Laser- und Halbleiterfertigung Anwendung.

Aus dem Stand der Technik ist die Herstellung von fluordotiertem Quarzglas bekannt. Die US 2001/0018835 A betrifft beispielsweise die Herstellung von UV-festem, F-dotiertem Quarzglas, wobei Sootkörper in einer Atmosphäre aus Wasserstoff oder Sauerstoff erhitzt werden und in einem sich daran anschließenden Verfahrensschritt eine Sinterung in einer fluorhaltigen Atmosphäre erfolgt. Durch diese zweistufige Behandlung soll eine Verbesserung der UV-Transmission des resultierenden Quarzglases erreicht werden.

JP 63-225543 A beschreibt ein Fluordotieren und Verglasen einer porösen siliziumoxidenthaltenden Vorform mit dem Ziel strukturelle Defekte zu vermeiden.

WO 03/101900 A offenbart ein Verfahren zur Herstellung einer dotierten optischen Faservorform, in dem der Sootkörper zunächst in einer chlorhaltigen Atmosphäre behandelt wird und in einem anschließenden Schritt einem fluorhaltigen Gas ausgesetzt wird.

EP 0 161 680 A beschreibt ein Verfahren zur Herstellung einer Glasvorform für eine optische Faser, bei dem die Glasvorform aus feinen Glasteilchen enthaltend SiO₂ gebildet wird und anschließend in einer Atmosphäre aus He und SiF₄ gesintert wird.

EP 0 139 532 A beschreibt ein Verfahren zur Herstellung einer Vorform aus Glas für optische Fasern durch Erhitzen einer rußartigen Glas-Vorform in Gegenwart eines fluorhaltigen Gases.

Um eine möglichst hohe und gleichmäßige Dotierung zu erreichen, muss bei der Behandlung der SiO₂-Sootkörper ein Dotiergas eingesetzt werden, das in einem akzeptablen Temperaturfenster eine Reaktion des enthaltenden Fluors mit der SiO₂-Matrix ermöglicht und möglichst schnell in den Sootkörper eindiffundiert.

Hierzu sind aus dem Stand der Technik als gasförmige Fluorierungsmittel CF₄, SF₆, C₂F₆ und NF₃ bekannt. Diese Gase zeigen allerdings ein erhebliches Treibhauspotenzial (GWP, Global Warming Potential) und bleiben aufgrund ihrer chemischen Stabilität sehr lange in der Atmosphäre. Aufgrund von sich verschärfenden Umweltgesetzen und -regularien ist damit zu rechnen, dass das Inverkehrbringen solcher Substanzen zunehmend erschwert wird und die kommerzielle Verfügbarkeit sinkt, sodass sie für den Zweck der Herstellung fluorierter Quarzgläser zumindest dauerhaft nicht mehr zur Verfügung stehen.

Ein weiterer Nachteil der aus dem Stand der Technik bekannten Fluorierungsmittel ist ihr geringer Siedepunkt, was eine Handhabung erschwert. So werden für Fluorierungsmittel mit einem niedrigen Siedepunkt in den verwendeten Apparaturen verhältnismäßig große Volumina benötigt, die entsprechenden Fluorierungsmitteln müssen verhältnismäßig aufwendig in Druckgasflaschen aufbewahrt werden und zusätzlich sind in der Regel höhere Sicherheitsstandards erforderlich.

Aufgabe der vorliegenden Erfindung ist daher die Bereitstellung von einem Verfahren zur Herstellung von fluordotiertem Quarzglas, in welchem alternative Fluorierungsmittel Anwendung finden und mit dem die Herstellung fluorierter Quarzgläser möglich ist, wobei die Fluorierungsmittel allenfalls ein geringes Treibhauspotenzial aufweisen.

Eine weitere Aufgabe der vorliegenden Erfindung ist die Bereitstellung von einem Verfahren zur Herstellung von fluoriertem Quarzglas mittels alternativer Fluorierungsmittel, die effizient für die Fluorierung von Quarzgläsern eingesetzt werden können.

Aufgabe der vorliegenden Erfindung ist ferner das Bereitstellen eines Verfahrens, das die Herstellung von fluoriertem Quarzglas erlaubt, welches einen hohen Fluorgehalt und eine homogene Verteilung des Dotanden aufweist.

Weiterhin ist es Aufgabe der vorliegenden Erfindung ein Verfahren zur Herstellung von mit Fluor dotiertem Quarzglas bereitzustellen, wobei das Quarzglas einen hohen Gehalt an Fluor bei gleichzeitig geringer Blasigkeit aufweist.

Schließlich ist es eine weitere Aufgabe der vorliegenden Erfindung, ein Verfahren zur Herstellung von fluoriertem Quarzglas bereitzustellen, in welchem ein Fluorierungsmittel verwendet wird, das einfach gehandhabt werden kann, bei welchen in den verwendeten Apparaturen keine verhältnismäßig großen Volumina benötigt werden, auf eine verhältnismäßig aufwendig Handhabung mit Druckgasflaschen verzichtet werden kann und zusätzlich keine besonders hohen Sicherheitsstandards eingehalten werden müssen.

Gelöst werden diese Aufgaben durch die Verwendung von neuen Fluorierungsmitteln. Diese neuen Fluorierungsmittel zeichnen sich durch einen im Vergleich zum Stand der Technik höheren Siedepunkt aus, was die Handhabung der Fluorierungsmittel zumindest teilweise vereinfacht. Die erfindungsgemäßen Fluorierungsmittel weisen einen Siedepunkt von größer oder gleich -10 °C auf und können somit auf einfache Art und Weise einem Verdampfer zugeführt werden.

Demgemäß betrifft die vorliegende Erfindung ein Verfahren zur Herstellung von einem fluorierten Quarzglas, umfassend zumindest die nachfolgenden Verfahrensschritte:
a. Bereitstellen eines SiO₂-Sootkörpers;
b. Umsetzen des SiO₂-Sootkörpers mit mindestens einem Fluorierungsmittel unter Erhalt eines fluoriertem SiO₂-Sootkörpers;
c. Verglasen des fluorierten Si02-Sootkörpers.

Das erfindungsgemäße Verfahren ist dann dadurch gekennzeichnet, dass das Fluorierungsmittel einen Siedepunkt von größer oder gleich -10 °C aufweist.

Im Rahmen der vorliegenden Erfindung wird von Siedepunkten, die bei Normaldruck (1013 mbar) vorliegen, ausgegangen.

Durch die Verwendung von einem Fluorierungsmittel, welches einen Siedepunkt von größer oder gleich -10 °C aufweist, kann die Handhabung und Verfahrensweise der Fluorierung vereinfacht werden.

Im Rahmen der vorliegenden Erfindung wird unter einem Fluorierungsmittel eine chemische Substanz verstanden, die Fluoratome enthält und in der Lage ist, einen SiO₂-Sootkörper zu fluorieren.

In einer bevorzugten Ausführungsform der vorliegenden Erfindung weist das Fluorierungsmittel einen Siedepunkt von größer oder gleich -5 °C, vorzugsweise größer oder gleich 0 °C, weiter bevorzugt größer oder gleich 5 °C, weiter bevorzugt größer oder gleich 10 °C, weiter bevorzugt größer oder gleich 15 °C, weiter bevorzugt größer oder gleich 20 °C, auf.

Der obere Siedepunkt des erfindungsgemäß nunmehr vorgeschlagenen Fluorierungsmittels unterliegt insofern keinen besonderen technischen Beschränkungen, als dass das Fluorierungsmittel unter den üblichen Verfahrensbedingungen der Herstellung von synthetischem Quarzglas gasförmig mit dem SiO₂-Sootkörper zur Reaktion gebracht werden kann.

Im Rahmen der vorliegenden Erfindung sind Fluorierungsmittel bevorzugt, welche einen Siedepunkt von weniger oder gleich 300 °C, vorzugsweise weniger oder gleich 275 °C, weiter bevorzugt weniger oder gleich 250 °C, weiter bevorzugt weniger oder gleich 225 °C, weiter bevorzugt weniger oder gleich 200 °C, weiter bevorzugt weniger oder gleich 175 °C, weiter bevorzugt weniger oder gleich 150 °C, aufweisen.

Die vereinfachte Handhabung dieser alternativen Fluorierungsmittel ergibt sich unmittelbar aus den zuvor beschriebenen Siedepunktbereichen.

Damit weisen die erfindungsgemäß vorgesehenen Fluorierungsmittel vorzugsweise einen Siedepunktbereich von -10 bis 300 °C, weiter bevorzugt -5 bis 275 °C, weiter bevorzugt 0 bis 250 °C, weiter bevorzugt 5 bis 225 °C, weiter bevorzugt 10 bis 200 °C, weiter bevorzugt 15 bis 175 °C, noch weiter bevorzugt 20 bis 150 °C, auf.

Bei den erfindungsgemäß vorgesehenen Fluorierungsmitteln handelt es sich insbesondere um ein oder mehrere Fluorierungsmittel, ausgewählt aus der Gruppe, bestehend aus
i. sauerstoffhaltigen Fluorierungsmitteln; und
ii. nitrilhaltigen Fluorierungsmitteln.

Im Rahmen der vorliegenden Erfindung ist es auch möglich, Mischungen der vorgenannten sauerstoffhaltigen und nitrilhaltigen Fluorierungsmittel in dem erfindungsgemäßen Verfahren zu verwenden, wobei im Rahmen der vorliegenden Erfindung unter Mischungen sowohl Mischungen von reinen Fluorierungsmitteln, Mischungen von reinen nitrilhaltigen Fluorierungsmitteln und Mischungen von sauerstoffhaltigen und nitrilhaltigen Fluorierungsmitteln verstanden werden.

Im Folgenden werden nunmehr bevorzugte sauerstoffhaltige Fluorierungsmittel näher beschrieben.

In einer ersten Ausführungsform der vorliegenden Erfindung werden als sauerstoffhaltige Fluorierungsmittel Perfluorketone der allgemeinen Formel (I)

R_{F1}-CO-R_{F2} (I)

verwendet, wobei
der Rest R_{F1} ausgewählt wird aus der Gruppe, bestehend aus perfluorierten Kohlenstoffgruppen mit 1 bis 7 Kohlenstoffatomen und Fluor, und
der Rest R_{F2} ausgewählt wird aus der Gruppe, bestehend aus perfluorierten Kohlenstoffgruppen mit 1 bis 7 Kohlenstoffatomen.

In einer bevorzugten Ausgestaltung dieser ersten Ausführungsform besteht die perfluorierte Kohlenstoffgruppe aus 1 bis 6, weiter bevorzugt 2 bis 6, weiter bevorzugt 2 bis 5, weiter bevorzugt 2 bis 4, Kohlenstoffatomen.

Konkrete Beispiele für Verbindungen dieser ersten Ausführungsform sind
a) Perfluoro(2-methyl-3-pentanon); oder 1,1,1,2,2,4,5,5,5-nonafluoro-4-(trifluoromethyl)-3-pentanon;
b) Perfluoro(2-methyl-3-butanon), oder 1,1,1,3,4,4,4-heptafluoro-3-(trifluoromethyl)-2-buntanon; und
c) Perfluoro(2,2,-dimetyl-3-butanon).

In einer zweiten Ausführungsform der vorliegenden Erfindung werden als sauerstoffhaltige Fluorierungsmittel Perfluorether der allgemeinen Formel (II)

R_{F1}-C(X₁)(X₂)O-R_{F2} (II),

verwendet, wobei
der Rest R_{F1} ausgewählt wird aus der Gruppe, bestehend aus perfluorierten Kohlenstoffgruppen mit 1 bis 7 Kohlenstoffatomen und Fluor, und
der Rest R_{F2} ausgewählt wird aus der Gruppe, bestehend aus perfluorierten Kohlenstoffgruppen mit 1 bis 7 Kohlenstoffatomen; und die Reste X₁ und X₂ für F oder CF₃ stehen.

In einer bevorzugten Ausgestaltung dieser zweiten Ausführungsform besteht die perfluorierte Kohlenstoffgruppe aus 1 bis 6, weiter bevorzugt 2 bis 6, weiter bevorzugt 2 bis 5, weiter bevorzugt 2 bis 4, Kohlenstoffatomen.

Konkrete Beispiele für Verbindungen dieser zweiten Ausführungsform sind
a) Perfluoro-1-methoxypropan;
b) Perfluoro-2-isopropoxy-2-methylpentan;
c) Perfiuoro-1-ethoxyheptan; und
d) Perfluoro-2-n-butoxy-2-methylpentan.

In einer dritten Ausführungsform der vorliegenden Erfindung werden als sauerstoffhaltige Fluorierungsmittel Hydrofluorether der allgemeinen Formel (III)

R_{F1}-C(X₁)(X₂)O-R₂ (III),

verwendet, wobei
der Rest R_{F1} ausgewählt wird aus der Gruppe, bestehend aus perfluorierten Kohlenstoffgruppen mit 1 bis 7 Kohlenstoffatomen und Fluor;
der Rest R₂ für eine nicht-fluorierte Kohlenwasserstoffgruppe mit 1 bis 3 Kohlenstoffatomen steht; und
die Reste X₁ und X₂ für F oder CF₃ stehen.

In einer bevorzugten Ausgestaltung dieser dritten Ausführungsform besteht die perfluorierte Kohlenstoffgruppe aus 1 bis 6, weiter bevorzugt 2 bis 6, weiter bevorzugt 2 bis 5, weiter bevorzugt 2 bis 4, Kohlenstoffatomen.

Konkrete Beispiele für Verbindungen dieser dritten Ausführungsform sind
a) Methylnonafluorbutylether;
b) Ethylnonafluorbutylether; und
c) 2-Trifluormethyl-3-ethoxydodekafluorhexan.

Die vorgenannten konkreten Beispiele der ersten bis dritten Ausführungsformen sind kommerziell erhältlich.

Im Folgenden werden nunmehr bevorzugte nitrilhaltige Fluorierungsmittel als vierte Ausführungsform näher beschrieben.

Die nitrilhaltigen Fluorierungsmittel sind vorzugsweise Perfluornitrile der allgemeinen Formel (IV)

R_{F1}-C≡N (IV)

wobei der Rest R_{F1} ausgewählt wird aus der Gruppe, bestehend aus einer perfluorierten Kohlenstoffgruppe mit 1 bis 7 Kohlenstoffatomen. In einer bevorzugten Ausgestaltung dieser vierten Ausführungsform besteht die perfluorierte Kohlenstoffgruppe aus 1 bis 6, weiter bevorzugt 2 bis 6, weiter bevorzugt 2 bis 5, weiter bevorzugt 2 bis 4, Kohlenstoffatomen.

Konkrete Beispiele für Verbindungen dieser vierten Ausführungsform sind
a) Heptafluoro-isobutyronitril; oder
b) 2,3,3,3-tetrafluoro-2-(trifluoromethyl)propanenitril.

Auch diese Verbindung ist kommerziell erhältlich.

Wie anhand der vorstehenden Beispiele schon verdeutlicht, werden unter perfluorierten Kohlenstoffgruppen im Rahmen der vorliegenden Erfindung organische Verbindungen verstanden, bei denen an mindestens einem Kohlenstoffatom die Wasserstoffatome am Kohlenstoffgerüst vollständig durch Fluoratome ersetzt worden sind. Vorzugsweise sind alle Wasserstoffatome an dem Kohlenstoffgerüst durch Fluoratome ersetzt.

Die vorbeschriebenen Fluorierungsmittel werden im Rahmen der vorliegenden Erfindung mit einem SiO₂-Sootkörper zur Reaktion gebracht, wobei es zu einer Fluorierung des SiO₂-Sootkörpers kommt.

Ein Sootkörper im Rahmen der vorliegenden Erfindung ist ein poröser Rohling, der durch das Abscheiden von SiO₂-Partikel auf einem Träger gewonnen wird und der durch Verglasen in das endgültige Quarzglas überführt wird. Im Allgemeinen ist die Struktur des SiO₂-Sootkörpers ausreichend gasdurchlässig, was eine gleichmäßige Gasphasenbehandlung oder Sinterung erlaubt. Im Bereich von Schichten mit einer höheren Dichte ist dies nur eingeschränkt möglich, da diese Schichten Diffusionsbarrieren darstellen, die bei Trocknungs- und Sinterungsprozessen ein ungleichmäßiges Behandlungsergebnis verursachen können. Diese Problematik stellt sich wegen langer Diffusionswege insbesondere bei großvolumigen SiO2 -Sootkörpern mit hohen Wandstärken.

Für die Herstellung derartiger Sootkörper steht dem Fachmann eine Vielzahl von Verfahren zur Verfügung. Als Beispiele seien die sogenannten CVD-Prozesse genannt, insbesondere das OVD- und das VAD-Verfahren. Beim OVD-Verfahren (Outside Vapor Deposition) werden SiO₂-Partikel auf einer Zylindermanteloberfläche eines länglichen Trägers abgeschieden, der um seine Längsachse rotiert. Dabei kann der Träger beispielsweise aus Keramik, Graphit oder Quarzglas bestehen. Beim VAD-Verfahren (Vapor Axial Deposition) werden die SiO₂-Partikel auf einem scheibenförmigen rotierenden Träger in Richtung der Sootkörper-Längsachse aufgebaut. In beiden Verfahren können die SiO₂-Partikel schichtweise auf dem Träger unter Bildung des Sootkörpers abgeschieden werden.

Die entsprechenden SiO₂-Sootkörper weisen eine poröse Struktur auf, sodass die Fluorierungsmittel durch die Poren des SiO₂-Sootkörpers in die dreidimensionale Struktur des Körpers eindringen können und eine homogene Fluorierung des SiO₂-Sootkörpers bewirken.

Im Nachgang werden nun die einzelnen Verfahrensschritte a. bis c. näher beschrieben.

### Verfahrensschritt a.

Zur Herstellung des SiO₂-Sootkörpers wird zunächst ein Einsatzmaterial, das mindestens eine polymerisierbare Polyalkylsiloxanverbindung enthält, unter Bildung eines Einsatzmaterialdampfes verdampft.

Grundsätzlich kann erfindungsgemäß jede polymerisierbare Polyalkylsiloxanverbindung, welche sich zur Herstellung von synthetischem Quarzglas eignet, verwendet werden. Im Rahmen der Erfindung umfasst der Begriff Polyalkylsiloxan sowohl lineare (umfassend auch verzweigte Strukturen) als auch zyklische Molekularstrukturen.

Besonders geeignete cyclische Vertreter sind Polyalkylsiloxane mit der allgemeinen Summenformel

SiₚOₚ(R)₂ₚ,

wobei p eine ganze Zahl größer gleich 2 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe, bestehend aus Hexamethylcyclotrisiloxan (D3), Octamethylcyclotetrasiloxan (D4), Dekamethyl-cyclopentasiloxan (D5), Dodecamethylcyclohexasiloxan (D6), Tetradekamethylcycloheptasi-Ioxan (D7), Hexadecamethylcyclooctasiloxan (D8) sowie deren linearen Homologen und be-liebigen Mischungen der vorgenannten Verbindungen. Die Notation D3, D4, D6, D7 und D8 entstammt dabei einer von General Electric Inc. eingeführten Notation, bei der "D" die Gruppe [(CH₃)₂Si]-O- repräsentiert. Die Notation ist den auf dem Fachgebiet tätigen Personen bekannt.

Im Rahmen der vorliegenden Erfindung können auch Mischungen der vorgenannten Polyalkylsiloxanverbindungen verwendet werden.

Wegen der großtechnischen Verfügbarkeit in hoher Reinheit wird derzeit Octamethylcyclotetrasiloxan (OMCTS) bevorzugt eingesetzt. Im Rahmen der vorliegenden Erfindung ist es daher insbesondere bevorzugt, wenn es sich bei der Polyalkylsiloxanverbindung um Octamethylcyclotetrasiloxan (D4) handelt. Dem Fachmann ist bekannt, dass auch alternative Rohstoffe wie zum Beispiel Siliziumtetrachlorid oder Hexamethyldisiloxan (HMDS) oder andere einsetzbar sind.

Grundsätzlich ist es möglich, dass das Einsatzmaterial vor dem Einbringen in den Verfahrensschritt einer Aufreinigung unterzogen wird. Dem Fachmann sind solche Aufreinigungsverfahren bekannt.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der Polyalkylsiloxanverbindung erfolgen kann. Dies bedeutet, dass der Einsatzmaterialdampf bevorzugt zusätzlich ein Trägergas umfasst. Eine solche Vorgehensweise ist bevorzugt, wenn die Verdampfung des Einsatzmaterials unterhalb seines Siedepunktes stattfinden soll. Das Inertgas ist bevorzugt chemisch inert und ist weiter bevorzugt Stickstoff oder Argon. Alternativ kann als Trägergas auch Sauerstoff verwendet werden. Dabei liegt das Molverhältnis der polymerisierbaren Polyalkylsiloxanverbindung zum Trägergas bevorzugt im Bereich von 0,01 bis 2, besonders bevorzugt im Bereich von 0,02 bis 1,5 ganz besonders bevorzugt im Bereich von 0,05 bis 1,25. Insbesondere ist es bevorzugt, dass als Trägergas Stickstoff mit einem Feuchtegehalt von kleiner 40 Volumen-ppm und als Polyalkylsiloxanverbindung OMCTS eingesetzt wird. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird die Polyalkylsiloxanverbindung je nach gewähltem molekularem Verhältnis der Polyalkylsiloxanverbindung und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der Polyalkylsiloxanverbindung sein. Der Taupunkt ist wiederum abhängig vom gewählten molekularen Verhältnis aus Polyalkylsiloxanverbindung und Trägergas. In einer bevorzugten Ausführungsform wird dazu die Polyalkylsiloxanverbindung vor dem Verdampfen auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunktstemperatur der Mischung aus Polyalkylsiloxan und Trägergas liegt. Geeignete Verdampfungsverfahren werden z.B. in den Internationalen Patentanmeldungen WO 2013/087751 A und WO 2014/187513 A sowie der deutschen Patentanmeldung DE 10 2013 209 673 A beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Bei der Verwendung von Temperaturen unterhalb des Siedepunkts des Einsatzmaterials erfolgt die Verdampfung bevorzugt zusammen mit einem inerten Trägergas.

Im Rahmen der vorliegenden Erfindung wird unter einer "Verdampfung" der Vorgang ver-standen, bei der das Einsatzmaterial im Wesentlichen von der flüssigen Phase in eine gas-förmige Phase überführt wird. Dies geschieht bevorzugt, indem, wie oben beschrieben, Tem-peraturen verwendet werden, welche oberhalb des Taupunktes der polymerisierbaren Polyalkylsiloxanverbindung als Hauptkomponente des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird bevorzugt ein Einsatzmaterialdampf erzeugt, welcher vorzugsweise nicht weniger als 97 Mol.-%, bevorzugt nicht weniger als 98 Mol.-%, besonders bevorzugt nicht weniger als 99 Mol.-%, ganz besonders bevorzugt nicht weniger als 99,9 Mol.%, gasförmige Bestandteile enthält.

Der erzeugte Einsatzmaterialdampf wird in eine Reaktionszone geführt, in dem der Einsatzmaterialdampf durch Oxidation und/oder durch Hydrolyse zu SiO₂-Partikeln umgesetzt wird. Die resultierenden SiO₂-Partikel werden auf einer Ablagerungsfläche unter Ausbildung des SiO₂-Sootkörpers abgeschieden. Die möglichen Ausgestaltungen sind dem Fachmann bekannt.

Der in Verfahrensschritt a. des erfindungsgemäßen Verfahrens bereitgestellte Sootkörper weist vorzugsweise eine mittlere Dichte in einem Bereich von 18 bis 30 %, bezogen auf die relative Dichte von Quarzglas, auf. Dabei wird eine Dichte von Quarzglas von 2,21 g/cm³ zugrunde gelegt. Die erzielte Dichte ist unter anderem abhängig vom Abstand der Brenner zu der Ablagerungsfläche, der eingestellten Temperatur, der Stöchiometrie der Gase sowie der Geometrie der Brenner. Entsprechende Einstellungen sind dem Fachmann bekannt. Die Dichte des Sootkörpers kann mit bekannten Verfahren bestimmt werden. Beispielsweise kann die lokale Dichte des Sootkörpers mittels computertomographischer Verfahren bestimmt werden, indem Schnittaufnahmen des Sootkörpers erstellt werden. Die mittlere Dichte ergibt sich dann aus der Mittelung über alle Messpunkte.

Besonders bevorzugt ist eine Ausführungsform des erfindungsgemäßen Verfahrens, in dem der Sootkörper eine spezifische Oberfläche nach BET von 7 bis 16 m²/g, vorzugsweise 10 bis 15 m²/g aufweist, bestimmt gemäß DIN-ISO 9277:2003-5.

Der aus dem Verfahrensschritt a. resultierende Sootkörper kann vor der Umsetzung mit dem Fluorierungsmittel in Verfahrensschritt b. getrocknet werden, um eventuell im Sootkörper befindliche Verunreinigungen, wie beispielsweise Hydroxylgruppen (OH-Gruppen) zu entfernen. Dabei kann die Trocknung thermisch und/oder chemisch erfolgen. Besonders bevorzugt ist eine Ausführungsform, in der der Sootkörper in Verfahrensschritt a. bei einer Temperatur in einem Bereich von 700 bis 1100 °C thermisch und/oder chemisch getrocknet wird.

Das thermische Trocknen des Sootkörpers wird vorzugsweise in Gegenwart eines oder mehrerer Inertgase durchgeführt. Auf diese Weise wird verhindert, dass bereits gereinigte Bereiche des Sootkörpers erneut kontaminiert werden. Vorzugsweise ist das Inertgas ausgewählt aus der Gruppe bestehend aus He, Ar, N₂ sowie Mischungen davon.

Weiterhin bevorzugt wird die chemische Trocknung des Sootkörpers in Gegenwart einer chlorhaltigen Verbindung durchgeführt. Besonders bevorzugt ist die Verwendung von Chlor (Cl₂).

Weitere Verfahrensweise zur chemischen Trocknung des Sootkörpers ist die Verwendung von Kohlenmonoxid (CO).

Besonders bevorzugt ist eine Ausführungsform, in der der Sootkörper in Verfahrensschritt a. zuerst in Gegenwart eines Inertgases und dann in Gegenwart einer chlorhaltigen Verbindung getrocknet wird, wobei die Temperatur jeweils in einem Bereich von 700 bis 1000 °C liegt.

### Verfahrensschritt b.

Im Verfahrensschritt b. wird dann der Sootkörper einer Fluorierung mit den erfindungsgemäßen Fluorierungsmitteln unterworfen. Die Dotierung des Sootkörpers erfolgt in Verfahrensschritt b. des erfindungsgemäßen Verfahrens durch Behandlung des Sootkörpers mit einem Gas, das zumindest ein der vorbeschriebenen Fluorierungsmittel umfasst. Dabei kann es sich bei dem Fluorierungsmittel auch um eine Mischung aus mehreren erfindungsgemäßen Fluorierungsmitteln handeln.

Darüber hinaus ist es möglich, dass die erfindungsgemäßen Fluorierungsmittel in Kombination mit dem bereits aus dem Stand der Technik bekannten Fluorierungsmitteln, wie beispielsweise CF₄, SF₆, C₂F₆ und NF₃ verwendet werden.

Das Fluorierungsmittel kann dabei beispielsweise mit einem Trägergas verwendet werden, wodurch vorzugsweise eine homogene Verteilung des Fluorierungsmittels in dem Sootkörper erreicht werden kann. Hierzu umfasst das verwendete Gas vorzugsweise 5 bis 100 Mol-%, weiter bevorzugt 30 bis 100 Mol-%, jeweils bezogen auf die Gesamtmenge des Gases, an erfindungsgemäßen Fluorierungsmittel. Daher ist eine Ausführungsform des Verfahrens bevorzugt, in der der Anteil des Fluorierungsmittels an dem Gas 5 bis 100 Mol-%, vorzugsweise 30 bis 100 Mol-%, jeweils bezogen auf die Gesamtmenge des Gases, beträgt. Die Menge an Fluorierungsmittel in dem Gas kann dabei je nach Art des Fluorierungsmittels variieren.

Als besonders vorteilhaft hat es sich erwiesen, wenn die Behandlung des Sootkörpers in Verfahrensschritt b. des erfindungsgemäßen Verfahrens bei erhöhter Temperatur durchgeführt wird. Auf diese Weise lassen sich eine homogene Verteilung des Dotierstoffs sowie ein geringer Grad an unerwünschten Verunreinigungen erreichen. Daher ist eine Ausführungsform bevorzugt, bei der die Behandlung des Sootkörpers in Verfahrensschritt b. bei einer Temperatur in einem Bereich von 700 bis 1250 °C erfolgt. Weitere geeignete Temperaturen für die Umsetzung des SiO₂-Sootkörpers mit dem Fluorierungsmittel liegen einen Temperaturbereich von 700 bis 1100 °C.

Die Temperatur bzw. der Temperaturbereich, in dem die Behandlung erfolgt, sollte dabei unter Berücksichtigung der eingesetzten fluorhaltigen Verbindung gewählt werden.

Nach der Behandlung des Sootkörpers mit dem Fluorierungsmittel wird der so erhaltene Sootkörper in einer Ausgestaltung des erfindungsgemäßen Verfahrens auf eine Temperatur in einem Bereich von 950 bis 1150 °C unter Ausbildung eines fluorierten Sootkörpers erhitzt. Bei dieser Behandlung kommt es zu einer Kompaktierung des fluorierten Sootkörpers, so dass die mittlere Dichte des resultierenden fluorierten Sootkörpers maximal 80%, vorzugsweise maximal 60%, der relativen Dichte von Quarzglas beträgt. In einer besonders bevorzugten Ausführungsform beträgt die mittlere Dichte des so erhaltenen Sootkörpers 40 bis 80%, vorzugsweise 50 bis 60%, der relativen Dichte von Quarzglas. Die Temperatur, auf die der fluorierte Sootkörper erhitzt wird, hängt vom gewünschten Kompaktierungsgrad sowie der verwendeten fluorhaltigen Verbindung ab. Auf diese Weise wird erreicht, dass das eingebrachte Fluor in der SiO₂-Matrix des Sootkörpers fixiert wird, während gleichzeitig aber noch nicht alle Poren verschlossen sind. Dadurch wird ein Gasaustausch ermöglicht und beispielsweise noch vorhandene Verunreinigungen oder mögliche Gaseinschlüsse können entfernt werden. Als besonders vorteilhaft hat es sich erwiesen, wenn der fluorierte Sootkörper des erfindungsgemäßen Verfahrens auf eine Temperatur erhitzt wird, die mindestens 100 °C niedriger ist, als die spätere Verglasungstemperatur. Daher ist eine Ausführungsform bevorzugt, in der die Temperatur mindestens 100 °C, vorzugsweise 150 °C, unterhalb der Verglasungstemperatur des fluorierten Sootkörpers liegt.

Weiterhin hat es sich als vorteilhaft erwiesen, die Trocknung des fluorierten Sootkörpers in einer chlorhaltigen Atmosphäre vorzunehmen. Dadurch kommt es zu einer Substitution der OH-Gruppen im Zwischenprodukt durch Chlor, was in der späteren Faser zu einer Verringerung der Dämpfung führt. Daher ist eine Ausführungsform bevorzugt, bei der der fluorierte Sootkörper in einer chlorhaltigen Atmosphäre getrocknet wird, wobei die Trocknung bevorzugt bei einer Temperatur in einem Bereich von 700 bis 1100 °C erfolgt. Besonders bevorzugt umfasst die chlorhaltige Atmosphäre eine chlorhaltige Verbindung, vorzugsweise Cl₂. Weiterhin bevorzugt ist eine Ausführungsform, in der der Anteil der chlorhaltigen Verbindung 5 bis 100 Vol.-%, bezogen auf das Gesamtvolumen des Gases, beträgt.

Im Rahmen der vorliegenden Erfindung ist es möglich, die Fluorierung des SiO₂-Sootkörpers in einem Inertgasofen, einem atmosphärischen Ofen, einen Tiegelrohrofen, einen Durchstromofen, einen isothermischen Ofen oder einen Retortenofen durchzuführen.

### Verfahrensschritt c.

In dem Verfahrensschritt c. des erfindungsgemäßen Verfahrens wird der fluorierte Sootkörper verglast. Vorzugsweise liegt die Verglasungstemperatur in Verfahrensschritt c. in einem Bereich von 1100 bis 1500 °C, vorzugsweise 1150 bis 1350 °C. Um Blasenbildung im späteren Quarzglas zu vermeiden hat es sich als vorteilhaft erwiesen, wenn die Verglasung im Unterduck oder unter Helium- oder Helium-/Fluorierungsmittel Mischgasatmosphäre durchgeführt wird. Dies hat weiterhin den Vorteil, dass das Material der Prozesskammer nicht durch aggressive und korrosive Gase angegriffen wird und daher einem verringerten Verschleiß unterliegt.

Um die Materialien, insbesondere der Prozesskammer, zu schonen, hat es sich als vorteilhaft erwiesen, wenn die Dotierung des Sootkörpers und die Verglasung des fluorierten Sootkörpers in unterschiedlichen Prozesskammern erfolgen. Daher erfolgt gemäß erfindungsgemäßen Verfahren die Verglasung in Verfahrensschritt c. in einer zweiten Prozesskammer, die sich von der ersten Prozesskammer unterscheidet. Auf diese Weise kann jede der Prozesskammern für die entsprechenden Prozessschritte optimiert werden und eine übermäßige Belastung der Materialien, beispielsweise durch aggressive und korrosive Gase bei hohen Temperaturen, wird vermieden. Daher ist eine Ausführungsform bevorzugt, in der das Verglasen in Verfahrensschritt c. in einer zweiten Prozesskammer erfolgt, die sich von der ersten Prozesskammer, in der die Verfahrensschritte a. und b. durchgeführt werden, unterscheidet. Dabei kann es sich bei der zweiten Prozesskammer beispielsweise um einen Zonenofen handeln, in dem die Verglasung des fluorierten Sootkörpers zonenweise erfolgt. Vorzugsweise wird die zweite Prozesskammer nicht mit fluorhaltigen Gasen beaufschlagt.

Der Verfahrensschritt c. des Verglasens des fluorierten SiO₂-Sootkörpers kann den üblichen, dem Fachmann an sich bekannten Öfen durchgeführt werden. Beispiele sind Öfen mit einer konstanten Temperatur, Gasdrucksinteröfen, Vakuumöfen, Durchflussöfen, Öfen bei Normal- oder Niederdruck.

Weiterhin bevorzugt handelt es sich bei der zweiten Prozesskammer um einen Verglasungsofen. Derartige Öfen sind dem Fachmann bekannt und können entsprechend den jeweiligen Anforderungen an die Größe und Form des Sootkörpers im erfindungsgemäßen Verfahren eingesetzt werden.

In einer weiteren Ausführungsform erfolgen die Verfahrensschritte b. und c. in einem isothermen Ofen mit Quarzglas-Prozessrohr. Entsprechende Öfen sind dem Fachmann aus dem Stand der Technik bekannt.

Beim Transport des fluorierten Sootkörpers von der ersten Prozesskammer in die zweite Prozesskammer kann es infolge des Wassergehalts der Atmosphäre zu einer Eindiffusion von Wasser und infolge davon zu einer Kontamination mit OH-Gruppen und damit einhergehend zu einer axial und radial inhomogenen Verteilung der OH-Gruppenkonzentration in dem späteren Quarzglas kommen. Weiterhin hat die Anwesenheit der OH-Gruppen im fluorierten Sootkörper den Nachteil, dass diese im Bereich der üblichen Arbeitswellenlängen optischer Fasern eine hohe Absorption zeigen und daher die Qualität des späteren Produkts negativ beeinflussen. Um die OH-Konzentration im fluorierten Sootkörper zu senken, hat es sich daher als vorteilhaft erwiesen, wenn der fluorierte Sootkörper vor der Verglasung einem Trocknungsschritt unterzogen wird.

Daher ist eine Ausführungsform bevorzugt, in der der fluorierte Sootkörper in der zweiten Prozesskammer vor der Verglasung einem weiteren Trocknungsschritt unterzogen wird, wobei das Trocknen bei einer Temperatur in einem Bereich von 700 bis 1200 °C erfolgt. Es hat sich gezeigt, dass auf diese Weise Dekontaminationen beseitigt werden können. Durch das Erhitzen des fluorierten Sootkörpers auf eine Temperatur oberhalb von 700 °C werden OH-Gruppen freigesetzt, die infolge der Porosität des Zwischenproduktes vor der Erhitzungsfront wandern und das Zwischenprodukt verlassen. Damit bereits gereinigte Bereiche des Zwischenproduktes nicht von Neuem mit freigesetztem Wasser reagieren, können diese durch eine Spülung mit Inertgas oder durch Absaugen entfernt werden. Es hat sich als vorteilhaft erwiesen, die Verglasung des fluorierten Sootkörpers unter vermindertem Druck durchzuführen. Auf diese Weise erfolgt während des Sinterprozesses eine gleichzeitige Dehydrierung des Sootkörpers und etwaige Einschlüsse werden vermieden. Zudem wird die Blasenbildung im späteren Quarzglas minimiert. Dieses Verfahren hat allerdings den Nachteil, dass im Sootkörper physikalisch gebundene Dotierstoffe, insbesondere gasförmige Fluorverbindungen, während des Verglasungsprozesses, insbesondere in den äußeren Schichten, teilweise desorbieren können. Die Folge ist die Ausbildung eines unerwünschten Konzentrationsgradienten und eine Verarmung an Fluor. Diese Maßnahmen können in der zweiten Prozesskammer durchgeführt werden, so dass ein aufwendiger Umbau vermieden wird. Um eine neuerliche Kontamination zu verhindern, hat es sich als vorteilhaft erwiesen, wenn der Druck während des Trocknungsschritts innerhalb der zweiten Prozesskammer geringer ist als außerhalb der zweiten Prozesskammer. Besonders bevorzugt ist daher eine Ausführungsform, bei der der Druck während des Trocknungsschritts in der zweiten Prozesskammer weniger als 1 mbar beträgt.

In einer besonders bevorzugten Ausführungsform umfasst das erfindungsgemäße Verfahren die folgenden Verfahrensschritte:

| | |
|---|---|
| Verfahrensschritt A.1: | Bereitstellen eines Sootkörpers, wobei der Sootkörper eine mittlere Dichte in einem Bereich von 18 bis 30%, bezogen auf die relative Dichte von Quarzglas, aufweist; |
| Verfahrensschritt A.2: | Trocknen des Sootkörpers bei einer Temperatur in einem Bereich von 700 bis 1100 °C; |
| Verfahrensschritt A.3: | Gegebenenfalls chemisches Trocknen des Sootkörpers bei einer Temperatur in einem Bereich von 700 bis 1100 °C in Gegenwart eines chlorhaltigen Gases; |
| Verfahrensschritt B.1: | Behandeln des Sootkörpers mit einem Fluorierungsmittel in einer ersten Prozesskammer unter Ausbildung eines fluorierten Sootkörpers, wobei sich die mittlere Dichte des fluorierten Sootkörpers um maximal 30% erhöht, bezogen auf die mittlere Dichte des Sootkörpers in Schritt A.3; |
| Verfahrensschritt B.2: | Gegebenenfalls chemisches Trocknen des fluorierten Sootkörpers bei einer Temperatur in einem Bereich von 700 bis 1100 °C in Gegenwart eines chlorhaltigen Gases; |
| Verfahrensschritt C.1: | Verglasen des fluorierten Sootkörpers bei einer Temperatur oberhalb von 1000 °C in der Prozesskammer, wobei der Druck innerhalb der Prozesskammer geringer oder gleich dem Druck außerhalb der Prozesskammer ist, unter Ausbildung des dotierten Quarzglases. |

Ein weiterer Gegenstand der vorliegenden Erfindung ist dotiertes Quarzglas, das gemäß dem erfindungsgemäßen Verfahren erhältlich ist. Ein solches Quarzglas zeichnet sich durch eine homogene Dotierung mit Fluor, auch bei hohen Fluorgehalten und eine geringe Blasigkeit aus.

Die Eigenschaften des Quarzglases, wie beispielsweise Brechzahl und Absorptionsmaxima, können durch die Anwesenheit ausgewählter weiterer Fremdatome im Quarzglas beeinflusst werden. Daher ist eine Ausführungsform bevorzugt, in der das Quarzglas neben Fluor weitere Dotanden aufweist, wobei der Dotierstoff vorzugsweise ausgewählt ist aus der Gruppe bestehend aus Al₂O₃, Yb₂O₃, Er₂O₃, NbO₂, TiO₂, Ce₂O₃, Y₂O₃ sowie Mischungen davon.

Wie dem Fachmann bekannt ist, kann die Brechzahl von Quarzglas durch das gezielte Dotieren mit Fluor eingestellt werden. Allerdings sieht sich der Fachmann dabei häufig vor das Problem gestellt, dass die Menge an Fluor, die im Quarzglas vorhanden ist, durch den Herstellungsprozess begrenzt ist, da beispielsweise das Fluor durch entsprechende Verfahrensschritte wie Trocknen und Verglasen im Vakuum wieder aus dem Sootkörper ausgetragen wird. Das erfindungsgemäße Quarzglas zeichnet sich dagegen durch einen hohen Gehalt an Fluor sowie eine homogene Verteilung desselben im Quarzglas aus. So beträgt der Fluorgehalt im Quarzglas in einer bevorzugten Ausführungsform 1.000 bis 25.000 ppm, vorzugsweise 2.000 bis 20.000 ppm, jeweils bezogen auf Gewichtsanteile.

Quarzglas, insbesondere dotiertes Quarzglas, findet eine breite Anwendung in der Optik und Analytik. Daher ist ein weiterer Gegenstand der vorliegenden Erfindung die Verwendung des erfindungsgemäßen dotierten Quarzglases als optisches Bauteil, optische Faserform oder als Teil einer optischen Faser.

Weiterer Gegenstand der vorliegenden Erfindung ist die Verwendung der zuvor beschriebenen Fluorierungsmittel zur Herstellung von fluoriertem Quarzglas. Bezüglich besonderer Ausgestaltungen dieser Verwendungen wird auf die obigen Ausführungen zu dem erfindungsgemäßen Verfahren verwiesen.

## Patentansprüche

1. Verfahren zur Herstellung von einem fluorierten Quarzglas, umfassend die nachfolgenden Verfahrensschritte:
a. Bereitstellen eines SiO₂-Sootkörpers;
b. Umsetzen des Si02-Sootkörpers mit einem Fluorierungsmittel, welches einen Siedepunkt von größer gleich -10 °C aufweist, unter Erhalt eines fluorierten SiO₂-Sootkörpers;
c. Verglasen des fluorierten SiO₂-Sootkörpers.

2. Verfahren nach Anspruch 1, **dadurch gekennzeichnet, dass** die im Verfahrensschritt b. vorgesehene Fluorierung mit einem Fluorierungsmittel durchgeführt wird, welches ausgewählt wird aus der Gruppe, bestehend aus
i. sauerstoffhaltigen Fluorierungsmitteln;
ii. nitrilhaltigen Fluorierungsmitteln.
iii. Mischungen der sauerstoffhaltigen und nitrilhaltigen Fluorierungsmittel.

3. Verfahren nach Anspruch 1 oder 2, **dadurch gekennzeichnet, dass** die sauerstoffhaltigen Fluorierungsmittel ausgewählt werden aus der Gruppe, bestehend aus
i. Perfluorketonen der allgemeinen Formel (I)
R_{F1}-CO-R_{F2} (I),
wobei der Rest R_{F1} ausgewählt wird aus der Gruppe, bestehend aus perfluorierten Kohlenstoffgruppen mit 1 bis 7 Kohlenstoffatomen und Fluor; und der Rest RF₂ ausgewählt wird aus der Gruppe, bestehend aus perfluorierten Kohlenstoffgruppen mit 1 bis 7 Kohlenstoffatomen;
ii. Perfluorethern der allgemeinen Formel (II)
R_{F1}-C(X₁)(X₂)O-R_{F2} (II),
wobei der Rest R_{F1} ausgewählt wird aus der Gruppe, bestehend aus perfluorierten Kohlenstoffgruppen mit 1 bis 7 Kohlenstoffatomen und Fluor; der Rest RF₂ ausgewählt wird aus der Gruppe, bestehend aus perfluorierten Kohlenstoffgruppen mit 1 bis 7 Kohlenstoffatomen und die Reste X₁ und X₂ für Fluor oder CF₃ stehen;
iii. Hydrofluorethern der allgemeinen Formel (III)
R_{F1}-C(X₁)(X₂)O-R₂ (III),
wobei der Rest R_{F1} ausgewählt wird aus der Gruppe, bestehend aus perfluorierten Kohlenstoffgruppen mit 1 bis 7 Kohlenstoffatomen und Fluor, der Rest R₂ für eine nicht-fluorierte Kohlenwasserstoffgruppe mit 1 bis 3 Kohlenstoffatomen steht; und die Reste X₁ und X₂ für Fluor oder CF₃ stehen.

4. Verfahren nach Anspruch 1 oder 2, **dadurch gekennzeichnet, dass** die nitrilhaltigen Fluorierungsmittel ausgewählt werden aus der Gruppe, bestehend aus
iv. Perfluornitrilen der allgemeinen Formel (IV)
R_{F1}-C≡N
wobei der Rest R_{F1} ausgewählt wird aus der Gruppe, bestehend aus einer perfluorierten Kohlenstoffgruppe mit 1 bis 7 Kohlenstoffatomen.

5. Verfahren nach einem der Ansprüche 1 bis 4, **dadurch gekennzeichnet, dass** der Verfahrensschritt b. des Umsetzens des SiO₂-Sootkörpers mit dem bei größer gleich -10 °C siedenden Fluorierungsmittel bei einer Temperatur in einem Bereich von 700 bis 1250 °C erfolgt.

6. Verfahren nach einem der Ansprüche 1 bis 5, **dadurch gekennzeichnet, dass** der Verfahrensschritt c. des Verglasens des fluorierten SiO₂-Sootkörpers bei einer Temperatur in einem Bereich von 1100 bis 1500 °C, vorzugsweise 1150 bis 1350 °C, erfolgt.

7. Verfahren nach einem der Ansprüche 1 bis 6, **dadurch gekennzeichnet, dass** der fluorierte SiO₂-Sootkörper aus dem Verfahrensschritt b. vor dem Verglasen in dem Verfahrensschritt c. einem oder mehreren weiteren Trocknungsschritten unterzogen wird, wobei das Trocknen bei einer Temperatur in einem Bereich von 700 bis 1200 °C erfolgt.

8. Fluoriertes Quarzglas, erhältlich nach einem Verfahren gemäß einem der Ansprüche 1 bis 7.

9. Fluoriertes Quarzglas nach Anspruch 8, **dadurch gekennzeichnet, dass** die Fluoridkonzentration in dem dotierten Quarzglas 1000 bis 25000 ppm, vorzugsweise 2000 bis 20000 ppm, jeweils bezogen auf Gewichtsanteile, beträgt.

10. Verwendung von einem Fluorierungsmittel, welches einen Siedepunkt von größer gleich -10 °C aufweist, zur Herstellung von fluoriertem Quarzglas.

11. Verwendung nach Anspruch 10, **dadurch gekennzeichnet, dass** das Fluorierungsmittel
i. ein sauerstoffhaltiges Fluorierungsmittel;
ii. ein nitrilhaltiges Fluorierungsmittel; oder
iii. eine Mischung des sauerstoffhaltigen und des nitrilhaltigen Fluorierungsmittels ist.

12. Verwendung nach Anspruch 10 oder 11, **dadurch gekennzeichnet, dass** die sauerstoffhaltigen Fluorierungsmittel ausgewählt werden aus der Gruppe, bestehend aus
i. Perfluorketonen der allgemeinen Formel (I)
R_{F1}-CO-R_{F2} (I),
wobei der Rest R_{F1} ausgewählt wird aus der Gruppe, bestehend aus perfluorierten Kohlenstoffgruppen mit 1 bis 7 Kohlenstoffatomen und Fluor; und der Rest RF₂ ausgewählt wird aus der Gruppe, bestehend aus perfluorierten Kohlenstoffgruppen mit 1 bis 7 Kohlenstoffatomen;
ii. Perfluorethern der allgemeinen Formel (II)
R_{F1}-C(X₁)(X₂)O-R_{F2} (II),
wobei der Rest R_{F1} ausgewählt wird aus der Gruppe, bestehend aus perfluorierten Kohlenstoffgruppen mit 1 bis 7 Kohlenstoffatomen und Fluor; der Rest RF₂ ausgewählt wird aus der Gruppe, bestehend aus perfluorierten Kohlenstoffgruppen mit 1 bis 7 Kohlenstoffatomen und die Reste X₁ und X₂ für Fluor oder CF₃ stehen;
iii. Hydrofluorethern der allgemeinen Formel (III)
R_{F1}-C(X₁)(X₂)O-R₂ (III),
wobei der Rest R_{F1} ausgewählt wird aus der Gruppe, bestehend aus perfluorierten Kohlenstoffgruppen mit 1 bis 7 Kohlenstoffatomen und Fluor, der Rest R₂ für eine nicht-fluorierte Kohlenwasserstoffgruppe mit 1 bis 3 Kohlenstoffatomen steht; und die Reste X₁ und X₂ für Fluor oder CF₃ stehen.

13. Verwendung nach Anspruch 10 oder 11, **dadurch gekennzeichnet, dass** die nitrilhaltigen Fluorierungsmittel ausgewählt werden aus der Gruppe, bestehend aus
i. Perfluornitrilen der allgemeinen Formel (IV)
R_{F1}-C≡N
wobei der Rest R_{F1} ausgewählt wird aus der Gruppe, bestehend aus einer perfluorierten Kohlenstoffgruppe mit 1 bis 7 Kohlenstoffatomen.

14. Verwendung nach einem der Ansprüche 10 bis 13, **dadurch gekennzeichnet, dass** das Fluorierungsmittel mit einem Trägergas oder ohne ein Trägergas in der Fluorierung verwendet wird.

15. Verwendung nach Anspruch 14, **dadurch gekennzeichnet, dass** der Anteil des Fluorierungsmittels in dem Gas 5 bis 100 Mol-%, bevorzugt 30 bis 100 Mol.-%, jeweils bezogen auf das Gesamtmenge des Gases, beträgt.
